# EUROPÄISCHE PATENTANMELDUNG

(11) **EP 0 872 407 A2**
(43) Veröffentlichungstag der Anmeldung: **21.10.1998**
(21) Anmeldenummer: 98101434.3
(22) Anmeldetag: 28.01.1998
(51) Int. Cl.: B62D 7/15

(54) **Mehrachslenkung**

(30) Priorität: 18.04.1997 DE 19716201
(71) Anmelder: CLAAS KGaA, 33428 Harsewinkel (DE)
(72) Erfinder: Diekhans, Norbert Dr., D-33335 Gütersloh (DE); Pickert, Heinz, D-33397 Rietberg (DE)

(57) **Zusammenfassung**

Es wird eine Mehrachslenkung vorzugsweise für ein landwirtschaftliches Ernte- oder Schlepperfahrzeug mit mindestens einer primär gesteuerten Achse und mindestens einer weiteren Achse vorgestellt, bei der der Lenkausschlagwinkel der weiteren Achse entlang einer progressiven Kennlinie in Abhängigkeit vom Lenkausschlagwinkel der primärgesteuerten Achse veränderbar ist. Durch die erfindungsgemäße Gestaltung wird eine Mehrachslenkung geschaffen, bei der sich unterschiedliche Mehrachslenkungsarten zu einer gemeinsamen Lenkstrategie vereinen. Eine derartige Lenkstrategie macht eine spezielle Schulung des Fahrpersonals und besondere Erfahrung im Umgang mit Fahrzeugen mit Mehrachslenkung überflüssig. Daher erhöht sie die Sicherheit gegen unkontrollierte und unerwartete Lenkausschläge.

## Beschreibung

Die Erfindung betrifft eine Mehrachslenkung vorzugsweise für ein landwirtschaftliches Ernte- oder Schlepperfahrzeug entsprechend dem Oberbegriff des Anspruches 1.

Mehrachslenkungen der gattungsgemäßen Art werden beispielsweise dort eingesetzt, wo unterschiedliche Einsatzzwecke landwirtschaftlicher Fahrzeuge eine Anpassung der Eigenschaften des Fahrzeuges bezüglich Wendigkeit und Spurtreue erforderlich machen. Diese erhöhten Anforderungen lassen sich durch verschiedene, im nachfolgenden kurz beschriebene Lenkungsarten verwirklichen. Die primärgesteuerte Achse einer gattungsgemäßen Mehrachslenkung wird üblicherweise hydrostatisch oder elektohydraulisch angesteuert.

Von dem oben erwähnten Lenkungsarten ist hierbei zunächst die allgemein übliche Vorderachslenkung zu erwähnen, bei der nur die Vorderräder eingeschlagen werden, während die Hinterräder in Geradeausstellung verbleiben. Diese Art der Lenkung wird insbesondere für den Straßenfahrbetrieb benötigte.

Zusätzlich besitzen landwirtschaftliche Fahrzeuge eine als Allradlenkung bezeichnete Lenkungsart, bei der Vorder- und Hinterräder gegensinnig eingeschlagen werden. Eine Allradlenkung wird bevorzugt dort eingesetzt, wo Bewegungen des Fahrzeuges auf kleinem Raum durchzuführen sind. Mit einem gegensinnigen Einschlag von Vorder- und Hinterrädern lassen sich beispielsweise beim Rangieren besonders kleine Wendekreise des Fahrzeuges realisieren.

Darüber hinaus ist als weitere Lenkungsart die sogenannte Synchronlenkung bekannt, bei der Vorder- und Hinterräder gleichsinnig eingeschlagen werden. Diese spezielle Lenkungsart kommt beispielsweise dann zum Einsatz, falls an einem abschüssigen Hanggelände eine zum Hang parallele Fahrspur gehalten werden muß. Die gleichsinnig eingeschlagenen Vorder- und Hinterräder verhindern dann ein Abrutschen des Fahrzeuges am Hang bzw. eine Änderung der Bewegungsrichtung des Fahrzeuges. Die Synchronlenkung wird darüber hinaus dann eingesetzt, falls im Gelände eine möglichst geringe Bodenbelastung bzw. eine hieraus resultierende geringe Bodenverdichtung erreicht werden soll. In diesem Fall werden Vorder- und Hinterräder des Fahrzeuges um einen relativ großen Winkelbereich - eine Größenordnung des Winkelbereiches von 15° ist hierbei durchaus üblich - gleichsinnig ausgelenkt. Die vier oder mehr Räder des Fahrzeuges erzeugen durch die große gleichsinnige Auslenkung eine der Radzahl entsprechende Anzahl dicht nebeneinander liegender Fahrspuren, so daß eine erhöhte Bodenverdichtung durch die Belastung mehrerer Räder in einer Fahrspur vermieden wird.

Es ist leicht vorstellbar, daß die oben beschriebenen unterschiedlichen Lenkungsarten bezüglich der Bedienung des Fahrzeuges hohe Anforderungen an das Fahrpersonal stellen. In diesem Zusammenhang sind insbesondere Sicherheitsaspekte zu beachten, die sich bei der Umschaltung zwischen den einzelnen Lenkungsarten, aber auch insbesondere bei der Benutzung der Mehrachslenkung bei unterschiedlichen Fahrgeschwindigkeiten des Fahrzeuges ergeben. Die besondere Problematik der Allradlenkung ergibt sich aus der Tatsache, daß herkömmliche Allradlenkungen so gestaltet sind, daß der Lenkausschlag der Hinterräder demjenigen der Vorderräder gegensinnig entspricht. Dieses kann je nach Geschwindigkeit des Fahrzeuges und Größe bzw. Geschwindigkeit der Lenkbewegung zu schnellen, unerwarteten Richtungswechseln des Fahrzeuges führen. Diese spezielle Problematik birgt insbesondere bei ungeübten Fahrzeuglenkern Unfallrisiken in sich.

Der vorliegenden Erfindung liegt die Aufgabe zugrunde, die geschilderten Nachteile gattungsgemäßer Mehrachslenkungen insbesondere bei der Allradlenkungsart zu beseitigen. Darüber hinaus soll eine Mehrachslenkung geschaffen werden, bei der sich die oben beschriebenen unterschiedlichen Lenkungsarten zu einer gemeinsamen Lenkstrategie vereinen. Eine derartige Lenkstrategie macht eine spezielle Schulung des Fahrpersonals und besondere Erfahrung im Umgang mit Fahrzeugen, welche die Möglichkeit unterschiedlicher Lenkungsarten bieten, überflüssig. Sie erhöht insbesondere die Sicherheit gegen unkontrollierte und unerwartete Lenkausschläge.

Die Aufgabe wird erfindungsgemäß in Verbindung mit den Oberbegriffsmerkmalen durch die im kennzeichnenden Teil des Hauptanspruches angegebene technische Lehre gelöst. Dabei wird der Lenkausschlagwinkel der weiteren Achse des Fahrzeuges entlang einer progressiven Kennlinie in Abhängigkeit vom Lenkausschlagwinkel der primärgesteuerten Achse veränderbar gesteuert. Die Veränderung des Lenkausschlages entlang einer progressiven Kennlinie bedeutet, daß ein Lenkausschlag der primärgesteuerten Achse in einem Bereich um die Nullage herum zunächst nur einen geringfügigen Lenkausschlag der weiteren Achse nach sich zieht, erst bei größeren Lenkausschlägen der primärgesteuerten Achse wird der Lenkausschlag der weiteren Achse nunmehr progressiv dem Lenkausschlag der primärgesteuerten Achse nachgeführt. Der Einsatz einer progressiven Kennlinie bewirkt bei Verwendung der Allradlenkung ein ruhiges Lenkverhalten bei Straßenfahrt, bei der üblicherweise nur kleine Lenkausschläge vom Fahrpersonal vorgenommen werden. Trotzdem ist die geforderte Wendigkeit des Fahrzeuges ohne Abstriche realisierbar, da größere Lenkausschläge der primärgesteuerten Achse entsprechend große Lenkausschläge der weiteren Achse bewirken. Darüber hinaus läßt die progressive Kennlinie für alle o.a. Lenkungsarten die Realisierung einer einheitlichen Lenkstrategie zu, die Sicherheitsrisiken bei Benutzung der Allradlenkung in Verbindung mit speziellen Arten der Synchronlenkung ausschließt.

Besondere Merkmale der erfindungsgemäßen Mehrachslenkung ergeben sich aus den Merkmalen der Unteransprüche Im folgenden wird davon ausgegangen, daß die primärgesteuerte Achse die in Fahrtrichtung des Fahrzeuges vordere Achse ist, sofern nicht ausdrücklich eine andere Definition gewählt wird. Folglich ist die weitere Achse die in Fahrtrichtung hintere Achse.

Es hat sich insbesondere als vorteilhaft erwiesen, daß die Steigung der verwendeten progressiven Kennlinie sich stetig verändert. Durch dieses Merkmal sind sprunghafte Veränderungen des Lenkverhaltens, die Unsicherheiten beim Fahrpersonal auslösen könnten, ausgeschlossen.

Die Steuerung des Lenkausschlagwinkels der weiteren, hinteren Achse läßt sich vorteilhaft durch ein elektrohydraulisches Lenksystem realisieren. Das elektrohydraulische Lenksystem kann dabei mindestens einen Lenkreglerbaustein und ein für die Steuerung eines Lenkzylinders zuständiges Magnetventil beinhalten. Ein derartiger Aufbau ist kostengünstig zu verwirklichen und kann in seinen Bauabmaßen klein gehalten werden.

Im Lenkreglerbaustein lassen sich eine oder mehrere Kennlinien des Lenkverhältnisses zwischen Lenkausschlagwinkel der vorderen Achse und Lenkausschlagwinkel der weiteren, hinteren Achse abspeichern. Der Lenkreglerbaustein besitzt einen durch ein Steuersignal beaufschlagbaren Signaleingang, wobei das Steuersignal mit Hilfe eines Signalgebers, der direkt an der vorderen Achse plaziert ist, aus dem Lenkausschlagwinkel der vorderen Achse generiert wird.

Ferner ist es möglich, en Sollwert für die hintere Achse direkt aus dem Lenkraddrehwinkel abzuleiten.

Es hat sich darüber hinaus als vorteilhaft erwiesen, den Lenkregler der weiteren, hinteren Achse mit einer separaten Einstellvorrichtung zur Verschiebung des Kennlinienursprungs der weiteren, hinteren Achse im Hinblick auf den Lenkausschlagwinkel der primärgesteuerten Achse des Fahrzeuges zu versehen. Die Einstellvorrichtung weist zweckmäßigerweise mindestens zwei Einstellbereiche auf, wobei die Bereiche gleiche oder unterschiedliche Größen besitzen und wobei an den Bereichsgrenzen vorzugsweise Rastpunkte liegen.

Die Einstellvorrichtung kann zweckmäßigerweise so gestaltet sein, daß ihr ein oder mehrere Potentiometer zugeordnet sind. Werden die verschiedenen Einstellbereiche der Einstellvorrichtung durch einen Potentiometer abgedeckt, so bietet dieser Potentiometer eine Kombination mehrerer Stellbereiche in einer Vorrichtung. Der erste Verstollbereich wird um die Nullage des Potentiometers zur Kennliniensteigungsänderung benutzt. Ein weiterer Stellbereich dient dazu, eine progressive Grundkennlinie aus dem Koordinatenursprung heraus auf verschiedene Weise zu verschieben. Hierbei besteht die Möglichkeit, die Form der Grundkennlinie zu erhalten oder sie zu verändern.

Wird die Grundkennlinie beispielsweise mit ihrem Ursprung entlang der Ordinate eines Koordinatensystems verschoben, wobei bei dem in Rede stehenden Koordinatensystem auf der Ordinate die Werte für linke und rechte Lenkwinkel aufgetragen sind, so bedeutet dies, daß bei Beibehaltung der Geradeausstellung der Vorderräder die Hinterräder um einen kleinen Winkel nach rechts oder links ausgelenkt werden. Dies dient beispielsweise dazu, den durch ein an das Zugfahrzeug angehängies Arbeitsgerät hervorgerufenen Seitenzug auszugleichen.

Eine Verschiebung entweder auf der Ordinate oder entlang einer im Winkel zur Ordinate liegenden Linie ohne Veränderung der progressiven Ursprungskennlinienform führt dazu, daß unter Umständen die Maximalausschläge der Hinterräder nicht voll ausgenutzt werden können. Aus diesem Grunde sieht eine weitere vorteilhafte Ausgestaltung der Mehrachslenkung vor, die Endausschläge der Ursprungskennlinie bei einer Verschiebung der Kennlinie beizubehalten.

Soll mit Hilfe der erfindungsgemäßen Mehrachslenkung eine sogen. Hangabdrift des Fahrzeuges kompensiert werden, d.h. das langsame Abgleiten des Fahrzeuges bei einer parallel zur Hangneigung liegenden Fahrtrichtung, so wird mit Hilfe der Einstellvorrichtung ein gewisser Versatzwinkel an der weiteren, hinteren Achse vorgewählt. Der Fahrer des Fahrzeuges nimmt zur Einhaltung der zur Hanglange parallelen Fahrspur einen zur Hinterachsauslenkung gleichsinnigen, gleichgroßen Lenkausschlag manuell mit Hilfe des Lenkrades vor. Es ergibt sich somit durch die Verknüpfung des vorgewählten Einstellwertes und des Lenkungsausschlages des Fahrers die sogen. Hundegangstellung der Fahrzeugräder.

Soll durch die Einstellvorrichtung die sogenannte Hundegangstellung der Mehrachslenkung verwirklicht werden, das heißt die parallele Ausrichtung von Vorder- und Hinterrädern, so kann dies durch eine Verschiebung des Kennlinienursprungs entlang einer im Winkel von beispielsweise 45 ° zur Ordinate verlaufenden Linie erfolgen. Bei einer auf diese Weise vorgewählten Hundegangstellung aller Räder arbeitet die Hinterradlenkung dann symmetrisch entlang der vorgegebenen progressiven Kennlinie um diese voreingestellte Hundegangstellung herum entsprechend der Lenkausschläge der durch das Fahrpersonal betätigten Vorderräder.

Eine extreme Art der Hundegangstellung des Fahrzeuges, wie sie beispielsweise für geringe Bodenbelastungen erforderlich ist, ist maschinenparameterabhängig und wird vorteilhaft dadurch verwirklicht, daß mii Hilfe der Einstellvorrichtung ein großer Ausschlag des Lenkwinkels vorgewählt wird, wie dies ein weiterer Bereich der Einstellvorrichtung mit einem Maximalwert bei beispielsweise +/- 15° ermöglicht. Um bei dieser mit Hilfe der Einstellvorrichtung vorgewählten Lenkungsart trotzdem die Reaktion des Fahrzeuges in Kurven leicht beherrschbar zu gestalten ist jedem Wert des Einstellbereiches der Einstellvorrichtung des Lenkreglerbausteines der weiteren, hinteren Achse eine Verschiebung der o.a. progressiven Kennlinie für das Lenkwinkelverhältnis zwischen dem Lenkausschlagwinkel der hinteren Achse und dem Lenkausschlagwinkel der vorderen Achse zugeordnet.

Es hat sich darüber hinaus als vorteilhaft herausgestellt, daß ebenso wie der weiteren, hinteren Achse der direkt vom Lenkrad betätigten primärgesteuerten Achse ein zusätzliches elektrohydraulisches Lenksystem zugeordnet ist, das mindestens einen Lenkreglerbauslein und ein zugeordnetes Magnetventil aufweist, wobei das elektrohydraulische Lenksystem mit einem Signaleingang für ein von einer automatischen Spurführung erzeugtes Steuersignal versehen ist. Die automatische Spurführung dient dazu, das Fahrzeug automatisch entlang einer vorgegebenen Linie, beispielsweise einer bestimmten Pflanzenreihe, zu steuern, ohne daß der Fahrer manuelle Lenkkorrekturen vornehmen muß.

Durch die Verwendung eines elektrohydraulischen Lenksystems an der primär gesteuerten Achse kann man neben dem Einsatz einer automatischen Spurführung und/oder eines Steering -by-wire Systems auch eine leichte Umkehrung der Arbeitsrichtung des Fahrzeuges realisieren. Dies geschieht dadurch, daß die Lenkreglerbausteine der vorderen und der weiteren, hinteren Achse bei Umkehrung der Arbeitsrichtung des Fahrzeuges ihrer Achse zugeordnet bleiben und entsprechend der Umkehrung der Arbeitsrichtung die 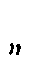 neue" vordere und die weitere, hintere Achse angesteuert werden. Dies bedingt, daß die durch Steuersignale beaufschlagten Signaleingänge der Lenkreglerbausteine so geschaltet sind, daß eine Umschaltung zwischen automatischer Spurführung und Hinterachslenkung bewirkt wird. Dies bedeutet im einzelnen, daß dem mit dem Steuersignal der Vorderachslenkung beaufschlagten Signaleingang des Lenkreglerbausteins der weiteren, hinteren Achse bei Umkehrung der Arbeitsrichtung das Steuersignal der automatischen Spurführung zugeordnet wird. Analog hierzu wird dem mit dem Steuersignal für die automatische Spurführung beaufschlagten Signaleingang des Lenkreglerbausteines der vorderen Achse bei Umkehrung der Arbeitsrichtung das Steuersignal für die Vorderachslenkung zugeordnet. Im Zusammenhang mit der Umkehrung der Arbeitsrichtung ist es sinnvoll, arbeitsrichtungsabhängige Einrichtungen wie Lenkradpostion, Fahrersitzposition oder Kabinenposition abzutasten. Üblicherweise ist eine Umkehrung der Arbeitsrichtung mit einer Drehung (oder einem Umbau) der Fahrerkabine um 180° in die andere Richtung verbunden oder es wird eine Rückfahreinrichtung genutzt.

Allerdings kann es für bestimmte Erntearbeiten wie beispielsweise das Mähen von Gras mit Rückfahreinrichtung am Zugfahrzeug sinnvoll sein, eine automatische Umschaltung der Achsansteuerung bei Arbeitsrichtungsumkehr zu unterbinden. In diesem Fall wird nach der Arbeitsrichtungsumkehr die nunmehr in Fahrtrichtung liegende hintere Achse durch das Lenkrad primärgesteuert und die weitere, in Fahrtrichtung vorne liegende Achse entsprechend der erfindungsgemäßen Kennlinie abhängig gesteuert. Für diese spezielle Hecklenkvariante wird die primär gesteuerte Achse über ein Kreuzventil mit dem Orbitrol verbunden und angesteuert.

Die erfindungsgemäße Gestaltung der Mehrachslenkung in der Art, daß die primärgesteuerte vordere Achse ebenfalls mit einem Lenkregler und einem Magnetventil versehen ist, ermöglicht es darüber hinaus, eine spezielle Problematik der Verbindung zwischen Synchronlenkungsart und Allradlenkungsart zu beseitigen. Ist bei dem mit der erfindungsgemäßen Mehrachslenkung versehenen Fahrzeug mit Hilfe der Einstellvorrichtung bereits an der weiteren, hinteren Achse ein großer Verstellwinkel vorgewählt worden (Hundegang) und hat eine Verschiebung der progressiven Kennlinie infolge dieser Verstellung stattgefunden, so bewirkt ein zusätzlicher Lenkausschlag des Fahrers in gleicher Richtung, in der die vorderen und hinteren Räder bereits infolge der Diagonalfahrt ausgelenkt sind, durch die Verschiebung der Kennlinie einen u.U. sehr schnell vonstatten gehenden Lenkumschlag der weiteren, hinteren Achse in die entgegengesetzte Ausschlagsrichtung. Um dies zu verhindern, bzw. hinauszuzögern, hat es sich als zweckmäßig erwiesen, bei großer Verschiebung des Kennlinienursprunges der weiteren, hinteren Achse und großer Verstellgeschwindigkeit am Orbitrol aus den Ölkreislauf von Orbitrol- und Vorderachslenkzylinderbaugruppe durch das an der primärgesteuerten vorderen Achse befindliche Magnetventil eine gewisse Ölmenge zu entnehmen. Diese Ölmenge kann durch den Lenkreglerbaustein an der vorderen Achse dergestalt gesteuert werden, daß die Summe der sich ergebenen Lenkwinkelveränderungen von vorderer Achse und weiterer, hinterer Achse im wesentlichen konstant bleibt. Durch diese Maßnahme ergibt sich auch bei großen Verschiebungen der Kennlinie am Lenkrad ein gleichmäßigeres Lenkgefühl ohne abrupte Lenkumschläge, was inbesondere unter Sicherheitsaspekten vorteilhaft ist.

Um die Sicherheitsaspekte der erfindungsgemäßen Mehrachslenkung zusätzlich zu erhöhen, kann es von Vorteil sein, den Lenkreglerbaustein der primärgesteuerten vorderen Achse mit einem Kontrollmodus zu versehen, der vorzugsweise nur bei Straßenfahrt des Fahrzeuges wirksam ist und bei dem der Lenkreglerbaustein der vorderen Achse über eine Übertragungsfunktion den Lenkausschlagwinkel der in Fahrtrichtung hinteren Achse mit dem Lenkausschlagwinkel der in Fahrtrichtung vorderen Achse vergleicht.

Werden bei diesem Vergleich Sollwertabweichungen durch den Lenkreglerbaustein der vorderen Achse ermittelt, so kann dieser Lenkreglerbaustein eine Warnmeldung ausgeben, ein Steuersignal für die automatische Rückführung der weiteren, hinteren Achse in die Nullage und bei Bedarf auch die Arretierung der weiteren, hinteren Achse in dieser Position generieren. Darüber hinaus ist als Realisierung der Mehrachslenkung denkbar, daß bei ermittelten Sollwertabweichungen während des Lenkausschlagwinkelvergleiches der Lenkreglerbaustein der primärgesteuerten vorderen Achse eine Notlenkstrategie aktiviert. Der Vergleich der Lenkausschlagwinkel der primärgesteuerten und der weiteren, hinteren Achse erfolgt zweckmäßigerweise dergestalt, daß an der vorderen Achse ein zusätzlicher (redundanter) Lenkwinkelgeber das erforderliche Vergleichssignal zur Verfügung stellt. Ein derartiger zusätziicher Kontrollmodus des jeweiligen Lenkreglerbausteins der vorderen Achse ist insbesondere dann von Vorteil, wenn eine redundante Lenkstrategie dei Mehrachslenkung aus Sicherheitsgründen erforderlich ist.

Eine weitere vorteilhafte Ausgestaltungsvariante der Mehrachslenkung sieht vor, die Lenkreglerbausteine der Vorder- sowie der weiteren, hinteren Achse in eine elektronische Lenksteuerung zu integrieren. Hierdurch werden die Anschlußpins der einzelnen Lenkreglerbausteine reduziert.

Darüber hinaus lassen sich die Logikkomponenten der einzelnen Lenkreglerbausteine als getrennte Softwareprozeduren (Tasks) implementieren. Ebenso ist denkbar, die Logikkomponenten der Lenkreglerbausteine auf einer gemeinsamen Mikroprozessorhardware aufzubauen. Als zusätzliche Überwachungsfunktion ist es vorteilhaft, die elektronische Lenksteuerung, die die Lenkregler von Vorder- und weiteren, hinteren Achsen umfaßt, mit einem zusätzlichen Mikroprozessor zu versehen, der als Mikrocontroller die Signalein- und -ausgänge der Lenkreglerbausteine überwacht. Sollte der als Mikrocontroller arbeitende Mikroprozessor eine fehlerhafte Funktion eines der Lenkreglerbausteine feststellen, so kann in vorteilhafter Weise der Mikroprozessor die Funktion des fehlerhaften Lenkreglerbausteines übernehmen. Diese Gestaltung genügt auch höchsten sicherheitstechnischen Vorgaben.

Im folgenden wird die erfindungsgemäße Mehrachslenkung und die damit verbundenen besonderen Ausgestaltungen anhand von schematischen Schaltbildern naher erläutert.

Es zeigen:
- Figur 1: ein Diagramm für die Abhängigkeit des Lenkausschlagwinkels einer in Fahrtrichtung hinteren Achse und des Lenkausschlagwinkels der in Fahrtrichtung vorderen Achse vom Drehwinkel des Lenkrades mit aufgetragener Grundkennlinie HA mit progressivem Verlauf.
- Figur 2: ein Diagramm mit verschiedenartigen Verschiebungen der progressiven Grundkennlinie ohne Veränderung der Kurvenform.
- Figur 3: ein Diagramm mit den verschobenen progressiven Grundkennlinien entsprechend Figur 2 unter Beibehaltung der Endpunkte der Grundkennlinie.
- Figur 4: ein Diagramm mit stark verschobener progressiver Kennlinie.
- Figur 5: ein Diagramm, in welches progressive Grundkennlinien mit unterschiedlicher Steigung im Koordinatenursprung aufgetragen sind.
- Figur 6: ein Diagramm, in welches eine Kennlinienschar mit linearen Teilbereichen unterschiedlicher Steigung aufgetragen ist.
- Figur 7: eine schematische Prinzipdarstellung eines einfachen Aufbaues einer erfindungsgemäßen Mehrachslenkung mit progressiver Kennlinie.
- Figur 8: den erweiterten Aufbau der erfindungsgemäßen Mehrachslenkung aus Figur 7.
- Figur 9: die Ausgestaltungsvariante der Mehrachslenkung entsprechend Figur 8 nach Umkehrung der Arbeitsrichtung des Fahrzeuges.
- Figur 10, 11 und 12: abgewandelte Varianten der erfindungsgemäßen Mehrachslenkung entsprechend Figur 8.
- Figur 13: einen beispielhaften Aufbau für eine Einstellvorrichtung zur Vorwahl und Veränderung unterschiedlicher erfindungsgemäßer Kennlinien.

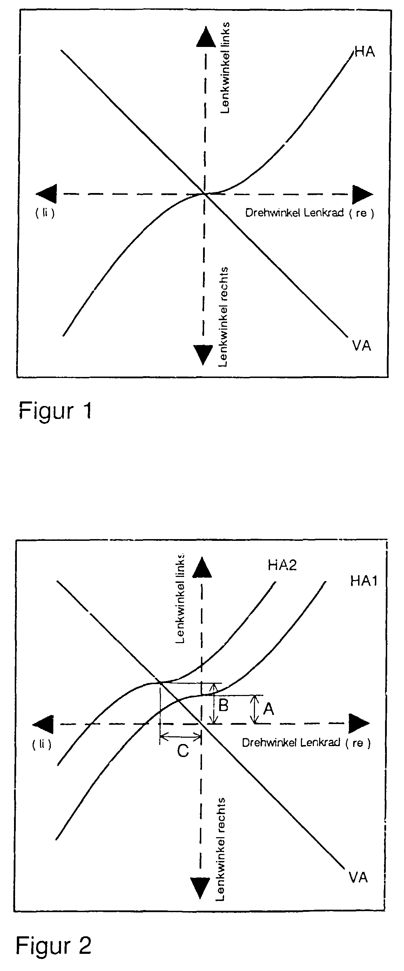

In der Figur 1 ist ein Koordinatensystem dargestellt, bei dem der Drehwinkel des Lenkrades nach rechts und links auf der waagerechten Achse und auf der senkrechten Achse der Lenkausschlag der Räder nach rechts und links aufgetragen ist.

In das Koordinatensystem eingetragen sind eine lineare Kennlinie mit der Bezeichnung VA, die eine direkte Proportionalität zwischen Drehwinkel am Lenkrad und Lenkwinkelausschlag an der primärgesteuerten vorderen Achse angibt. Darüber hinaus ist in der Figur 1 eine beispielhafte progressive Kennlinie HA für den Lenkwinkelausschlag der weiteren, hinteren Achse dargestellt Vordere und hintere Achse befinden sich in der Lenkungsart Allradlenkung, bei der die Vorder- und Hinterräder gegensinnig eingeschlagen werden. Aus der Kennlinie HA ist zu entnehmen, daß kleinen Drehwinkelausschlägen am Lenkrad um die Nullage herum keine oder nur sehr geringfügige Lenkausschläge der weiteren, hinteren Achse zugeordnet sind. Stärkere Drehwinkelausschläge am Lenkrad führen dann entsprechend der in der Figur 1 dargestellten progressiven Kennlinie zu einem überproportionalen Lenkausschlag der weiteren, hinteren Achse, bis beim maximalen Drehwinkel des Lenkrades Vorderachs- und Hinterachslenkausschlag die gleiche - allerdings gegensinnige - Größe aufweisen. Eine derartige, in der Figur 1 dargestellte progressive Kennlinie für die Hinterachslenkbewegung besitzt der Vorteil, daß sich insbesondere bei auf der Straße oder im Gelände gefahrenen höheren Geschwindigkeiten und den daraus resultierenden geringen Lenkausschlägen ein ausreichend ruhiges Fahrverhalten ergibt. Die in der Figur 1 dargestellte Kennlinie besitzt darüber hinaus einen stetigen Verlauf, wodurch Unregelmäßigkeiten und abrupte Lenkwinkelveränderungen vermieden werden.

Neben der in Figur 1 dargestellten allgemeinen progressiven Grundkennlinie ist zur Verwirklichung weiterer Lenkungsarten bzw. zur Erzielung einer für alle Gegebenheiten optimalen Lenkstrategie die Möglichkeit gegeben, die Ursprungskennlinie mit Hilfe einer oder mehrerer Einstellvorrichtungen vorzugsweise in Form von Potentiometern aus dem Koordinatenursprung heraus zu verschieben und/oder in ihrer Steigung zu verändern.

In Figur 2 ist zunächst eine Verschiebung der Ursprungskennlinie HA aus Figur 1 entlang der Ordinate (Achse. Lenkwinkel rechts/links) aufgetragen. Die verschobene Kennlinie trägt die Bezeichnung HA 1 und ist um den Betrag A aus dem Nullpunkt heraus nach oben verschoben. Die Verschiebung der Kennlinie bedeutet in der Praxis, daß bei Neutralstellung (Geradeausstellung) der Vorderräder eine leichte Winkelverstellung der Hinterräder entsprechend dem Betrag A stattgefunden hat, das heißt die Hinterräder sind leicht nach links eingeschlagen. Ein derartiger leichter Winkelversatz der Hinterräder kann beispielsweise dann notwendig sein, wenn ein aus einer Geräteanhängung resultierender auf das Schleppfahrzeug wirkender Seitenzug kompensiert werden soll.

In Figur 2 ist darüber hinaus eine Verschiebung der Ursprungskennlinie HA aus Figur 1 entlang einer Linie, welche um 45 Grad gegenüber der Ordinate geneigt ist und mit der Vorderachskennlinie VA übereinstimmt, aufgetragen. Die Verschiebung setzt sich folglich aus einem Verschiebeanteil B sowie einem betraglich gleich großen Verschiebeanteil C zusammen. Eine derartige Verschiebung der Ursprungskennlinie HA bedeutet in der Praxis die Verwirklichung der Lenkungsart 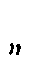 Hundegang 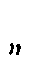 . Vorder- und Hinterräder sind hierbei gleichsinnig um einen bestimmten Betrag eingeschlagen. Ausgehend von dieser Hundeganggrundeinstellung erfolgt dann die Auslenkung der Hinterräder gemäß der Ursprungskennlinie HA symmetrisch um diese vorgewählte Hundegangeinstellung. Die Hundeganglenkungsart wird beispielsweise für Parallelfahrten entlang einer abschüssigen Hanglage benötigt. Aus dem Diagramm der Figur 2 wird ergänzend deutlich, daß durch die Verschiebung der Ursprungskennlinie hin zur Kennlinie HA 2 bei großen Lenkausschlägen der Vorderräder der gesamte Lenkwinkelbereich der Hinterräder nicht genutzt werden kann.

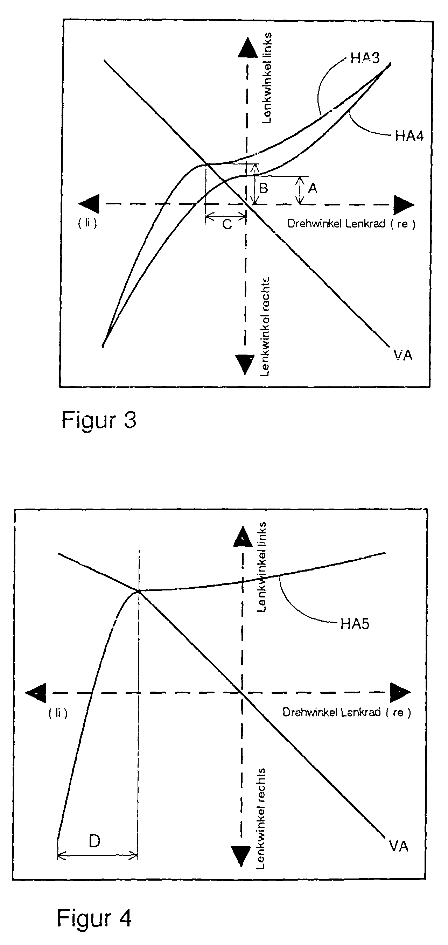

Um hier Abhilfe zu schaffen, das heißt um die volle Wendigkeit des Fahrzeuges zu gewährleisten, kann es vorteilhaft sein, wenn die Endanschläge der Ursprungskennlinie HA erhalten bleiben. In Figur 3 ist deshalb zur Verdeutlichung zum einen die Verschiebung der Ursprungskennlinie HA entlang der Ordinate um den Betrag A aufgetragen, wie sie auch in der Figur 2 dargestellt ist, die Endbereiche der Kennlinie weichen jedoch, wie dies aus Figur 3 deutlich zu ersehen ist, deutlich von derjenigen Darstellung der Figur 2 ab, da die Endausschläge der Hinterräder der in Figur 3 aufgetragenen Kennlinien HA 3 bzw. HA 4 denjenigen der Ursprungskennlinie HA aus Figur 1 entsprechen.

Wird die Kennlinie HA 3 aus Figur 3 entlang der Diagonalen entsprechend VA weiter verschoben, so ergibt sich im Extremfall eine starke Veränderung des Kennlinienverlaufes, die durch die Talsache bedingt ist, daß die Endanschläge der Ursprungskennlinie weiterhin beibehalten werden. Der Kennlinienverlauf HA 5 aus Figur 4 bedeutet in der Praxis, daß eine extreme Hundegangstellung mit einem vorgewählten Verstellwinkel von beispielsweise 15 Grad eingestellt worden ist. Aus der Kennlinie HA 5 läßt sich ersehen, daß beispielsweise im Schnittpunkt der Kennlinien VA und der Kurve HA 5 ein großer gleichgerichteter Ausschlag von Hinterrädern und Vorderrädern nach links vorhanden ist. Eine weitere geringfügige Auslenkung des Lenkrades nach links führt entsprechend der Kennlinie HA 5 zu einem drastischen Lenkumschlag der Hinterachse. Ein derartiges Verhalten der nachgeführten Hinterachse kann schwerwiegende Sicherheitsrisiken in sich bergen.

Aus diesem Grunde wird die hydrostatische Mehrachslenkung entsprechend einer besonderen Ausgestaltung erfindungsgemäß so ausgelegt, daß im Falle eines starken gleichsinnigen Ausschlages von Vorder- und Hinterrädern (Hundegang) ein weiterer Lenkradausschlag in die bereits von Vorderachse und Hinterachse eingeschlagene Richtung automatisch dazu führt, daß ein an der Vorderachse angeordnetes Magnetventil eine gewisse Ölmenge aus dem für die Steuerung der Vorderachse zuständigen Ölkreislauf, welcher durch ein Orbitrol und einen Lenkzylinder gebildet ist, abläßt. Diese Maßnahme bewirkt, daß der Fahrzeugführer mit einer veränderten Lenkübersetzung die Vorderräder bewegt. Dies zeigt deutlich die abknickende Kennlinie VA in Figur 4 oben links Es ist ersichtlich, daß nunmehr für die Hinterachse eine sogenannte Drehwinkelerweiterung D zur Verfügung steht. Der Lenkumschlag der Hinterräder erfolgt also entsprechend der Kennlinie HA 5 innerhalb eines erweiterten Drehwinkels des Lenkrades. Eine derartige Veränderung in der Extremstellung der Synchronlenkung trägt wesentlich zur Sicherheit der gesamten Lenkauslegung bei, da auch im Bereich großer Lenkradbewegungen ein gleichmäßiges Lenkgefühl erhalten bleibt.

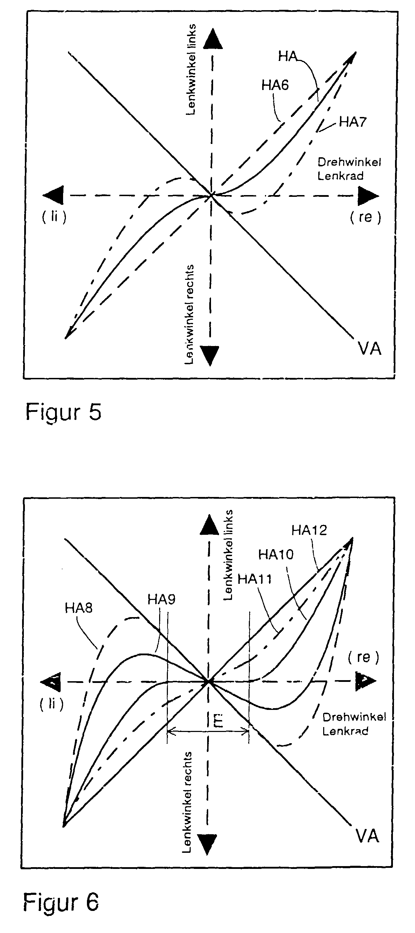

In den Figuren 5 und 6 sind weitere Möglichkeiten einer Veränderung der progressiven Kennlinie dargestellt, bei der die Steigung im Koordinatenursprung verändert wird. Die Endanschläge der Ursprungskennlinie HA aus Figur 1 bleiben auch in den modifizierten Kennlinien der Figuren 5 und 6 erhalten. Die in Figur 5 dargestellten modifizierten Kennlinien HA 6 bzw. HA 7 sind so ausgelegt, daß die Steigungswerte im Ursprung festgelegt und der Verlauf der Kennlinien entsprechend angepaßt wird. Ausgehend von der im Ursprung vorhandenen Steigung null der Ursprungskennlinie HA ergibt sich für die Kennlinie HA 6 eine Steigung von +1, das heißt, daß die Hinterräder entgegen der Drehrichtung der Vorderräder mit gleichem Lenkwinkel ausgelenkt werden. Eine derartige Hinterachskennlinie mit der Steigung +1 ergibt eine Allradlenkung mit hundertprozentigem Gleichlauf.

Die in der Figur 5 darüber hinaus dargestellte Kennlinie HA 7 weist in der Nullage eine der Vorderachskennlinie VA entsprechende Steigung von -1 auf. Dies bedeutet, daß die Hinterräder dem Lenkanschlag der Vorderräder im Bereich um den Nullpunkt herum gleichsinnig folgen, was definitionsgemäß einer Hundeganglenkung entspricht, wie sie vorzugsweise bei Fahrten parallel zu einer abschüssigen Hanglage notwendig ist. Verändert sich die Hanglage, kann der Hundegang durch einfaches Verdrehen des Lenkrades entsprechend der Hanglage ausgeglichen werden. Sollte an einer Achse ein Seitenzug entstehen, kann dieser durch eine einfache Korrektur der Kennliniensteigung behoben werden. Bei großen Vorderradlenkwinkeln, wie sie beispielsweise an einem Vorgewende benötigt werden, schwenken die Hinterachsräder mit zunehmendem Lenkwinkel der Vorderräder in die Allradlenkung um, wie dies ebenfalls aus der Kennlinie HA 7 der Figur 5 zu entnehmen ist.

Es ist festzuhalten, daß die aufgeführten Kennlinien nur bei Steigungen von -1 bis +1 in einem nutzbaren Bereich liegen. In diesem Bereich ist jede Art von Mischlenkung zwischen Hundegang und Allradlenkung über die Steigungseinstellung vorwählbar. Darüber hinaus sind besondere Einstellungen außerhalb des genannten Steigungsbereiches denkbar, mit der beispielsweise eine Seitenkraft ausgeglichen werden kann.

In Figur 6 sind ergänzend zu Figur 5 einige Kennlinien HA 8 bis HA 12 aufgetragen, bei denen im Gegensatz zur Darstellung der Kennlinien in Figur 5 ein gegebenenfalls über ein Potentiometer variierbarer Bereich E gegeben ist, in dem die Steigung der Kennlinien konstant bleibt.

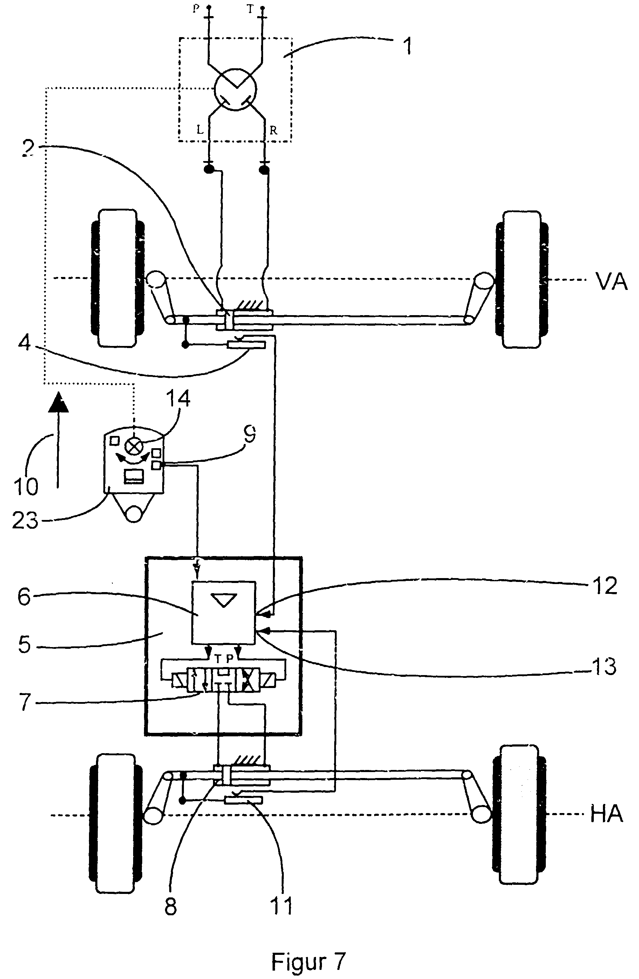

In der Figur 7 ist eine Ausführungsform der erfindungsgemäßen hydrostatischen Mehrachslenkung am Beispiel eines zweiachsigen Fahrzeuges mit einer vorderen Achse VA und einer weiteren, hinteren Achse HA dargestellt. Die Arbeitsrichtung des Fahrzeuges ist ergänzend durch den Pfeil 10 verdeutlicht. Die hydrostatische Mehrachslenkung weist zur direkten Ansteuerung der vorderen Achse ein Orbitrol 1 sowie einen Lenkzylinder 2 auf. Zur Abtastung des Lenkausschlagwinkels LW_{V} an der vorderen Achse befindet sich dort ein Meßwertaufnehmer 4. Der weiteren, hinteren Achse des Fahrzeuges ist ein elektrohydraulisches Lenksystem 5 zugeordnet, welches in der Figur 7 als Rechteck dargestellt ist und mehrere Komponenten aufweist, die innerhalb des Rechteckes schematisch dargestellt sind. Im wesentlichen handelt es sich bei den Komponenten um einen Lenkreglerbaustein LRB_{H} 6, ein Magnetventil MV_{H} 7 zur Ansteuerung eines direkt an der hinteren Achse befindlichen Lenkzylinders 8. In Analogie zur vorderen Achse besitzt auch die hintere Achse einen Meßwertaufnehmer 11, der den Lenkausschlagwinkel LW_{H} der weiteren, hinteren Achse in ein elektrisches Steuersignal wandelt, mit dem ein Signaleingang 13 des Lenkreglerbausteines LRB_{H} 6 beaufschlagt wird. Ein weiterer Signaleingang 12 des Lenkreglerbausteines LRB_{H} 6 ist an den Meßwertaufnehmer 4 der vorderen Achse angeschlossen. Innerhalb des Lenkreglerbausteines LRB_{H} 6 ist mindestens eine von den in der Figur 1-6 beispielhaft aufgetragenen progressiven Kennlinien HA für die Hinterachsauslenkung in Abhängigkeit von der Vorderachsauslenkung gespeichert. Eine Drehung des Lenkrades 14, das in einer Fahrkabine 23 schematisch dargestellt ist, führt über das Orbitrol 1 zu einer Auslenkung der vorderen Achse. Die Auslenkung ist in der Regel nicht unbedingt proportional zur Lenkraddrehung, wird jedoch vereinfacht so dargestellt. Der Lenkausschlagwinkel LW_{V} wird vom Meßaufnehmer 4 in ein Steuersignal umgeformt und über den Signaleingang 12 dem Lenkregler LRB_{H} 6 zugeleitet. Der Lenkregler LRB_{H} 6 steuert dann entsprechend der o.a. Kennlinie den Lenkausschlagwinkel LW_{H} der weiteren, hinteren Achse nach. Durch den Meßwertaufnehmer 11 ist eine Kontrolle bzw. ein Nachführen des Lenkwinkels LW_{H} bis zu dem von der Kennlinie geforderten Sollwert möglich.

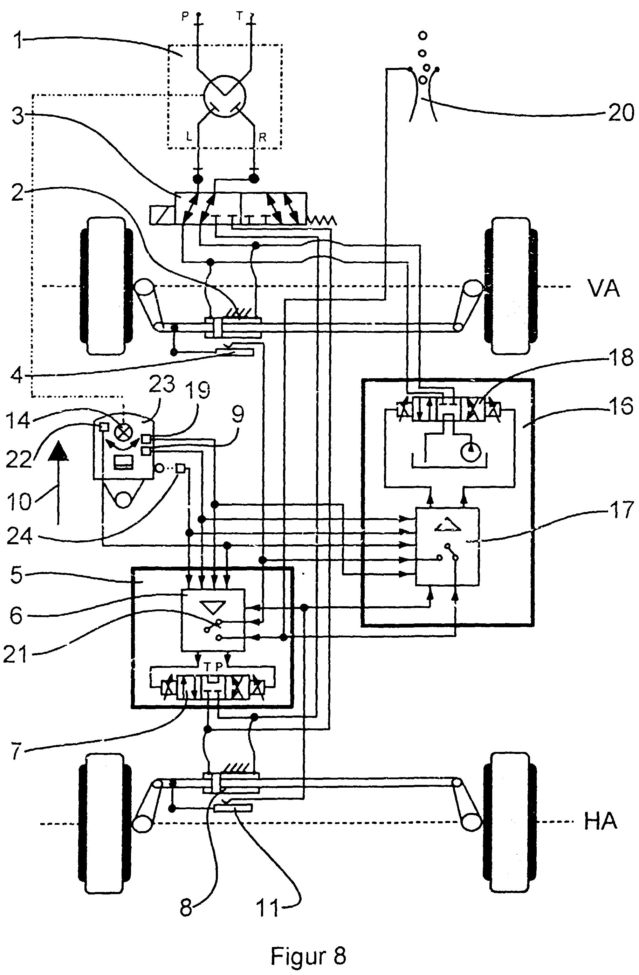

In der Figur 8 ist eine spezielle Ausgestaltung der hydrostatischen Mehrachslenkung dargestellt, die u.a. eine Drehwinkelerweiterung entsprechend der Figur 4 auf einfache Weise realisierbar macht. Im Ausführungsbeispiel der Figur 8 ist in Analogie der schematischen Darstellung der Figur 7 auch an der Vorderen Achse ein elektrohydraulisches Lenksystem 16 angeordnet Dieses Lenksystem 16 beinhaltet analog zu demjenigen der hinteren Achse einen Lenkreglerbaustein LRB_{V} 17 sowie ein Magnetventil MV_{V} 18. Das Orbitrol wird über das Lenklogikventil 3 auf den Lenkzylinder 2 geschaltet.

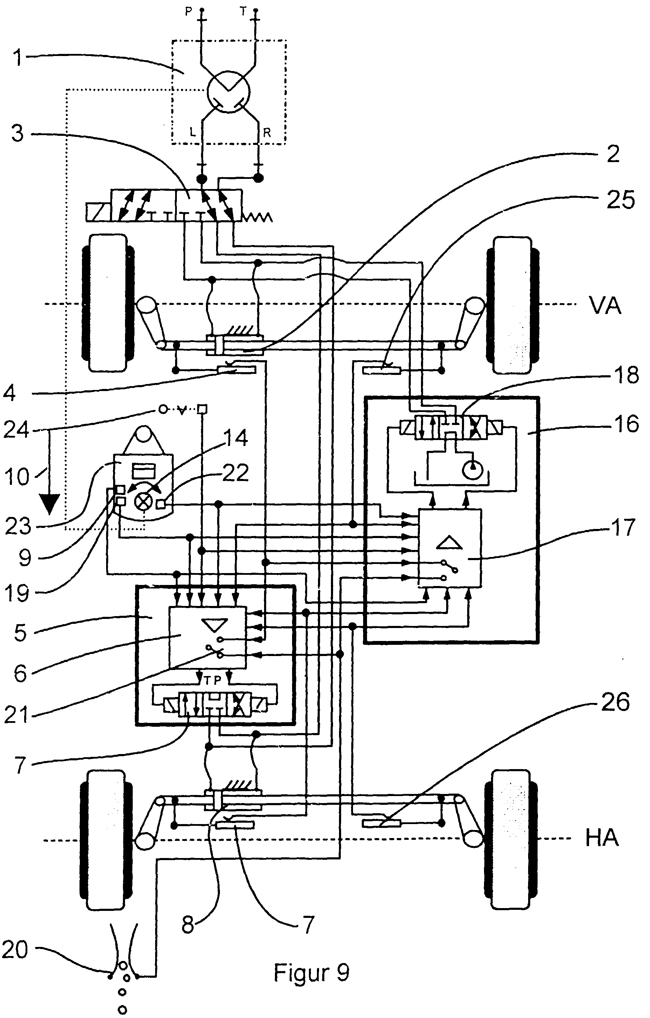

In die Figur 8 wurden zur Verdeutlichung einige weitere zusätzliche Bauteile schematisch aufgenommen. So ist als weitere Ergänzung in Arbeitsrichtung vorn am Fahrzeug ein Autopilotaufnehmer 20 angeordnet der ein elektrisches Steuersignal sowohl an den Lenkreglerbaustein LRB_{V} 17 der vorderen Achse als auch an den Lenkreglerbaustein LRB_{H} 6 an der weiteren, hinteren Achse liefert. Das Signal des Autopilotaufnehmers 20 wird allerdings im Lenkreglerbaustein LRB_{H} nicht verwendet, was durch die schematische Darstellung des Schalters 21 im Lenkreglerbaustein LRB_{H} dargestellt ist. Der Autopilotaufnehmer läßt sich durch einen Taster 22 in der Fahrkabine 23 ein- und ausschalten. Das entsprechende Schaltsignal für die Ein- und Ausschaltung des Autopiloten wird ebenfalls als Eingangssignal beiden Lenkreglerbausteinen zugeordnet. Durch die spezielle Ausgestaltung mit Lenkreglerbausteinen LRB_{H} 17 und LRB_{V} 6 an der vorderen und hinteren Achse sowie den entsprechend zugeordneten Magnetventilen MV_{H} 7 bzw. MV_{V} 18 ist es nunmehr möglich eine Umkehrung der Arbeitsrichtung des Fahrzeuges dadurch zu realisieren, daß die Lenkreglerkennlinien entsprechend der Umkehrung der vorderen und hinteren Achse vertauscht angesteuert werden Diese Umkehrung der Arbeitsrichtung ist in der Figur 9 verdeutlicht. Die Fahrerkabine 23 des Fahrzeuges wurde als gesamte Einheit um 180° geschwenkt, so daß die Fahrkabine 23 mit dem Lenkrad 14 nunmehr in die neue Arbeitsrichtung weist, die ergänzend durch den Pfeil 10 verdeutlicht ist. Die neue Stellung der Fahrkabine 23 wird den Lenkreglerbausteinen LRB_{H} 6 und LRB_{V} 17 durch eine Kabinenpositionsabtastung 24 mitgeteilt. Der Autopilotabtaster 20 befindet sich nunmehr an der zur Frontseite der Figur 8 entgegengesetzten Vorderseite. Der Schalter 21 im Lenkreglerbaustein LRB_{H} 6 der jetzigen in Arbeitsrichtung vorderen Achse wurde durch die Umkehrung der Arbeitsrichtung in die in Figur 9 dargestellte Position gebracht, was bedeutet, daß das am Lenkregler anliegende Autopilotsignal im Gegensatz zur Darsteilung der Figur 8 nunmehr im Lenkreglerbaustein LRB_{H} 6 verwertet werden kann, je nachdem, ob der Autopilot vom Fahrer eingeschaltet worden ist oder nicht. Die Signaleingänge der Lenkreglerbausteine LRB_{H} 6 und LRB_{V} 17 sind entsprechend der Arbeitsrichtungsumkehr vertauscht angesteuert, das bedeutet, daß der ursprünglich mit dem Steuersignal der Vorderachslenkung beaufschlagte Signaleingang des Lenkreglerbausteins LRB_{H} 6 nunmehr das Steuersignal für die automatische Spurführung (Autopilot) zugeordnet ist, während dem Lenkreglerbaustein LRB_{V} 17 bei Umkehrung der Arbeitsrichtung das Steuersignal für die Vorderachslenkung über eine progressive Kennlinie zugeordnet ist. Durch diese Umschaltung der Signaleingänge kann die gesamte Mehrachslenkung entsprechend der oben beschriebenen Lenkstrategien problemlos in umgekehrter Arbeitsrichtung eingesetzt werden. Das mit der Mehrachslenkung versehene Fahrzeug ist somit universell in beiden Fahrtrichtungen voll einsatzfähig. Sämtliche Umschaltungen an den Lenkreglerbausteinen können bei Umkehrung der Arbeitsrichtung automatisch vorgenommen werden, ohne daß der Fahrer manuell in einzelne Bauteile der Mehrachslenkung eingreifen muß.

Um die sicherheitstechnischen Aspekte der Mehrachslenkung zusätzlich zu verbessern, kann die Erfindung mit einem zusätzlichen im Lenkreglerbaustein integrierten Kontrollmodus versehen sein, der bei Straßenfahrt des Fahrzeuges wirksam ist und bei dem der Lenkreglerbaustein über eine Übertragungsfunktion den Lenkausschlagwinkel der in Fahrtrichtung hinteren Achse mit dem Lenkausschlagwinkel der in Fahrtrichtung vorderen Achse vergleicht. Die Lenkwinkel können dann vorzugsweise mit zusätzlichen, an den Achsen angeordneten Meßwertaufnehmern 25 und 26 gemessen werden. Die Meßwertaufnehmer sind in Figur 9 eingezeichnet. Die Meßwertaufnehmer 25 und 26 wandeln analog den bereits o.e. Meßwertaufnehmern 4 und 11 die Lenkausschläge an Vorder- und weiteren, hinteren Achse in Steuersignale um, die dem jeweiligen Lenkreglerbaustein zugeordnet werden. Hierbei ist zu berücksichtigen, daß infolge der Geometrie der Lenktrapeze der Räder die Lenkwinkel rechts und links verschieden sein können. Die daraus resultierend gegebenenfalls unterschiedlichen Signalwerte der Meßwertaufnehmer 25 und 26 werden durch eine angepaßte Kennlinie berücksichtigt. Die zusätzliche Kontrollmöglichkeit der Lenkstrategie ergibt sich dadurch, daß bei Straßenfahrt eine Autopilotfunktion am Fahrzeug nicht benötigt wird. Der entsprechende Lenkreglerbaustein, der bei Bedarf die Autopilotsteuerung übernimmt, ist somit bei Straßenfahrt funktionslos und kann von daher die Überwachungsfunktion im Rahmen einer redundanten Sicherheitsschaltung problemlos übernahmen. Da in dem Lenkregler eine oder mehrere der relevanten progressiven Kennlinien für die Steuerung der weiteren, hinteren Achse abgespeichert sind, ist eine Fehlfunktion des in Betrieb befindlichen Lenkreglers an der hinteren Achse erkennbar, so besteht zum einen die Möglichkeit, daß der Lenkreglerbaustein ein Steuersignal für die automatische Rückführung der hinteren Achse in die Nullage und gegebenenfalls die Arretierung der hinteren Achse in dieser Position generiert. Darüber hinaus ist sicherlich von Vorteil, dem Fahrer eine entsprechende Warnmeldung zu vermitteln und gegebenenfalls eine Notlauffunktion der Lenkung automatisch einzuschalten.

Natürlich ist es auch denkbar, die hydrostatische Mehrachslenkung erfindungsgemäß mit nur einem Lenkreglerbaustein LRB zu verwirklichen und trotzdem eine Umschaltung der Arbeitsrichtung vorzunehmen. In diesem Fall sind dann die Radwinkelgeber, das Orbitrol sowie die übrigen Anschlüsse von weiteren, hinteren Achse und vorderen Achse zu vertauschen.

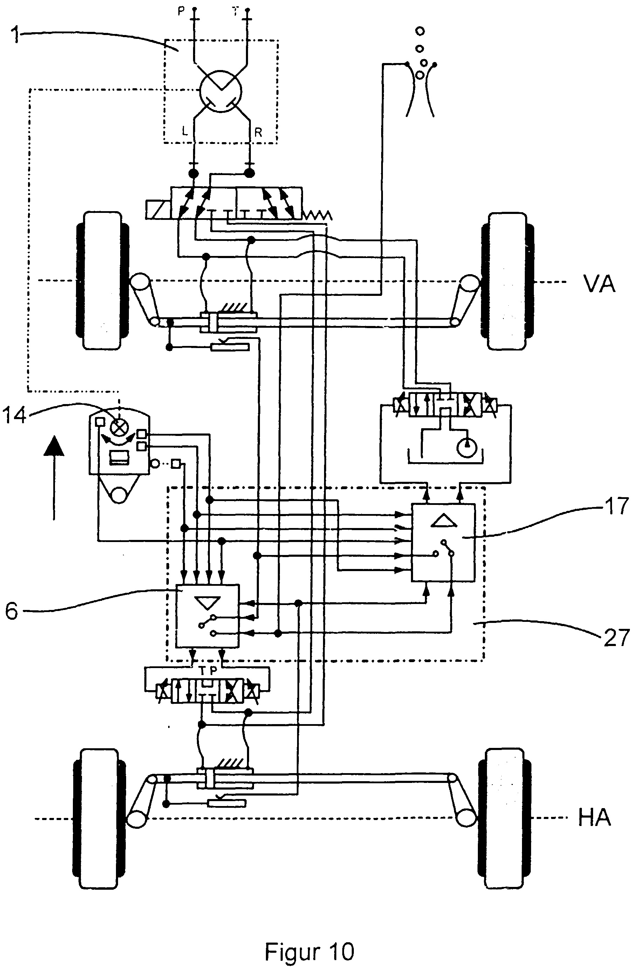

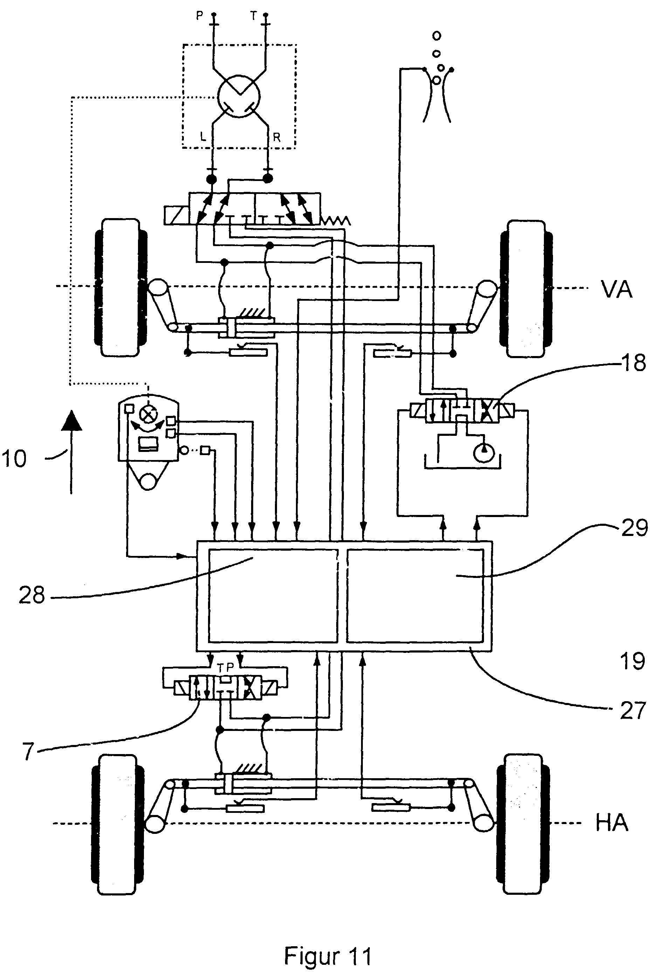

Die Figur 10 entspricht im wesentlichen derjenigen Darstellung der Figur 8, wobei jedoch die beiden Lenkreglerbausteine LRB_{V} 17 und LRB_{H} 6 in eine elektronische Lenksteuerung EL 27 integriert sind. Diese ist schematisch in der Figur 10 durch eine strichpunktierte Linie angedeutet. Die Integration in eine elektronische Lenksteuerung 27 bringt den Vorteil mit sich, daß entsprechende Anschlüsse und Signaleingänge der beiden integrierten Lenkreglerbausteine LRB_{H} 6 und LRB_{V} 17 reduziert werden können. In diesem Zusammenhang ist es denkbar, die Signalein- und - ausgänge beider Lenkreglerbausteine LRB_{V} 17 und LRB_{H} 6 an der Lenksteuerung EL 27 anzuordnen. Die Logikkomponenten beider Lenkreglerbausteine lassen sich darüber hinaus als Software-Prozeduren (Task) implementieren oder auf einer gemeinsamen Microprozessor-Hardware anordnen. Die Integration der Lenkreglerbausteine LRB_{V} 17 und LRB_{H} 6 in einem gemeinsamen Mircroprozessor ist schematisch in der Figur 11 dargestellt. Der Microprozessor 28 ist zusammen mit einem Microcontroller 29 in der elektronischen Lenksteuerung EL 27 integriert. Der Microcontroller hat die Aufgabe, die Signalein- und -ausgänge des Microprozessors 28 zu überwachen. Neben dem hiermit verbundenen positiven Sicherheitsaspekt bietet die integrierte Bauweise den zusätzlichen Vorteil von reduziertem Herstellungs- und Wartungsaufwand. Es besteht außerdem die Möglichkeit, daß der als Microcontroller arbeitende Microprozessor, sobald eine fehlerhafte Funktion eines der Lenkreglerbausteine LRB_{V} bzw. LRB_{H} festgestellt wird, die Funktion dieses Lenkreglerbausteines übernehmen kann. Ein zusätzlicher Sicherheitsaspekt ist darin zu sehen, daß der Microcontroller die Magnetventile MV_{V} 18 und MV_{H} 7 zusätzlich mitüberwachen kann und diese bei einem Fehler innerhalb der Mehrachslenkung in den stromlosen Zustand überführen kann. Dies kann beispielsweise mit Hilfe eines gemeinsamen Relais erfolgen, wobei dieses vom Microcontroller angesteuert wird.

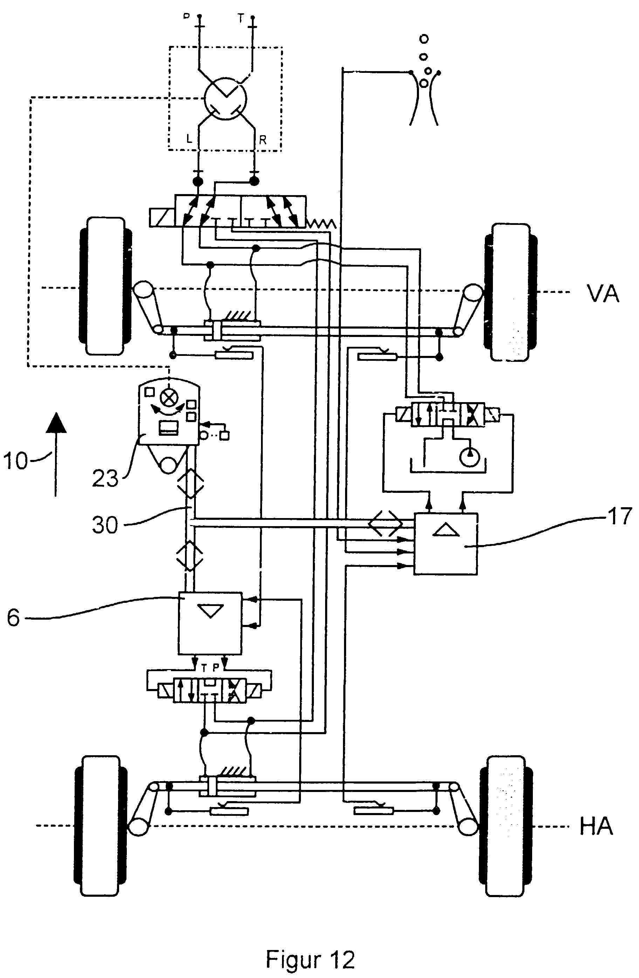

In der Figur 12 ist eine weitere Ausgestaltungsvariante der erfindungsgemäßen Mehrachslenkung schematisch dargestellt, bei der die beiden Lenkreglerbausteine LRB_{H} 6 und LRB_{V} 17 an einen vorhandenen oder zu implementierenden Fahrzeugbus 30 angeschlossen sind. Durch diesen Aufbau können die Lenkreglerbausteine untereinander und/oder mit dem Fahrzeugbus kommunizieren. Auf diese Weise wird der notwendige Verdrahtungsaufwand minimiert, darüber hinaus können zusätzliche Daten wie beispielsweise die Stellung der Kabine, Fahrgeschwindigkeit oder Warnmeldungen übermittelt werden.

Selbstverständlich ist eine Kombination der in den Figuren 7 - 12 dargestellten unterschiedlichen Ausführungsvarianten denkbar, die ein Höchstmaß an Integration mit einem minimierten Verdrahtungsaufwand verbindet.

Darüber hinaus ist festzustellen, daß die Lenkreglerbausteine über ein Kommunikationsnetzwerk mit einer Steuer- und Bedienkonsole, die vorzugsweise in der Fahrkabine angeordnet ist, verbunden sein können. Als Kommunikationsnetzwerk ist vorzugsweise ein serielles CAN-Bussystem einzusetzen. Dieses Bussystem kann in vorteilhafter Weise auch aus mehreren redundanten Systemen aufgebaut sein

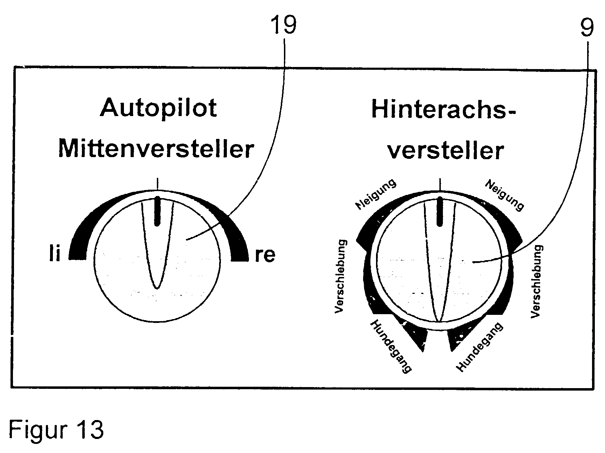

Ein Ausführungsbeispiel einer oben erwähnten Steuer- und Bedienkonsole ist auszugsweise in der Figur 13 dargestellt. In dieser Figur ist eine Möglichkeit dargestellt, mit Hilfe eines Stellpotis die Änderungen der erfindungsgemäßen Kennlinie HA durch nur einem Potentiometer, der in der Figur 13 als Hinterachsversteller bezeichnet ist, durchzuführen. Der Hinterachsversteller entspricht der Einstellvorrichtung EV_{H}, wie sie in den Figuren 7 - 12 in der Fahrkabine 23 dargestellt ist. Natürlich ist eine Kombination mit mehreren Potentiometern denkbar, das in der Figur 13 dargestellte Ausführungsbeispiel ist jedoch hinsichtlich Übersichtlichkeit und Platzbedarf besonders vorteilhaft. Die Einstellvorrichtung EV_{H} 9 besitzt einen ersten Drehbereich um die Potentiometernullage herum, der als Bereich 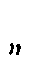 Neigung 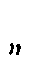 zur Kennliniensteigungsänderung eingesetzt wird, wie dies vorstehend insbesondere anhand der Figuren 5 und 6 gezeigt worden ist. Die in der Figur 13 dargestellte Stellung des Potentiometers bedeutet dann eine Steigung null der Kennlinie HA im Ursprung. An den Teilbereich 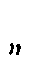 Neigung" schließt sich ein Bereich 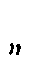 Verschiebung" an. Beim Übergang von einem Bereich in den anderen wird zunächst automatisch die Kennliniensteigung zurückgestellt, danach erst kann eine Verschiebung der Kennlinie aus dem Kennlinienursprung heraus erfolgen. An den zweiten Teilbereich 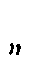 Verschiebung" schließt sich in dem hier dargestellten Ausführungsbeispiel zusätzlich eine sogenannte 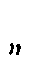 Hundegang" Stellung an. In dem Teilbereich 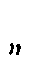 Hundegang" handelt es sich um einen fest eingestellten Hundegang, der sich vom Bereich 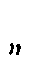 Vorschiebung 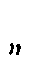 durch einen größeren Bereich von beispielsweise 0 bis 15 Grad unterscheidet.

Eine Ein- und Ausschaltung der Mehrachslenkung kann darüber hinaus dadurch erfolgen, daß der Drehpotentiometer eine zusätzliche herausgezogene 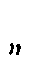 Ein"-Stellung bzw. eine eingedrückte 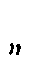 Aus"-Stellung besitzt. Es hat sich als vorteilhaft erwiesen, zwischen den einzelnen Einstellbereichen Rastpunkte anzuordnen. Ein Aktivieren und Deaktivieren der Mehrachslenkung kann zweckmäßig nur in der dargestellten Position des Drehpotis, die auch einen Rastpunkt aufweisen kann, und bei Geradeausstellung der Räder vorgenommen werden ( keine unvorhersehbare Lenkreaktion).

Die in Figur 13 zusätzlich dargestellte Einstellvorrichtung EV_{V} für die Vorderachse, die in diesem Ausführungsbeispiel als Autopilot-Mittenversteller gekennzeichnet ist, dient dazu, eine Korrektur der bereits bekannten Autopilotfunktion von Hand durchführen zu können.

Eine weitere vorteilhafte Ausgestaltung sieht vor, den ersten Bereich 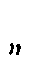 Neigung" des Hinterachsverstellpotentiometers durch einen seperaten, hier nicht dargestellten dritten Potentiometer 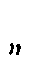 Neigung" vorzunehmen. Auf diese Weise lassen sich auch Mischformen aus Neigung und Verschiebung der Kennlinien einstellen.

### Bezugszeichenliste

- 1-: Orbitrol
- 2-: Lenkzylinder der primärgesteuerten Achse
- 3-: Lenklogikventil
- 4-: Meßwertaufnehmer der primärgesteuerten Achse
- 5-: Elektrohydraulisches Lenksystem der weiteren, hinteren Achse ELS_{H}
- 6-: Lenkreglerbaustein LRB_{H}
- 7-: Magnetventil MV_{H}
- 8-: Lenkzylinder der weiteren, hinteren Achse
- 9-: Einsteilvorrichtung EV_{H} (Hinterachsversteller)
- 10-: Pfeil Arbeitsrichtung
- 11-: Meßwertaufnehmer
- 12-: Signaleingang Lenkwinkel primärgesteuerte Achse
- 13-: Signaleingang Lenkwinkel Hinterachse
- 14-: Lenkrad
- 16-: Elektrohydraulisches Lenksystem der primärgesteuerten Achse ELS_{V}
- 17-: Lenkreglerbaustein LRB_{V}
- 18-: Magnetventil MV_{V}
- 19-: Einstellvorrichtung EV_{V} (Autopilot Mittenversteller)
- 20-: Autopilotabtaster (Automatische Spurführung)
- 21-: Schalter - Modulfunktion
- 22-: Taster Autopilot Ein/Aus
- 23-: Fahrkabine
- 24-: Kabinenpositionsabtastung
- 25-: Meßwertaufnehmer
- 26-: Meßwertaufnehmer
- 27-: Elektronische Lenksteuerung EL
- 28-: Microprozessor
- 29-: Microcontroller
- 30-: Fahrzeugbus

## Patentansprüche

1. Mehrachslenkung vorzugsweise für ein landwirtschaftliches Ernte- oder Schlepperfahrzeug mit mindestens einer primärgesteuerten Achse und mindestens einer weiteren Achse**, dadurch gekennzeichnet, daß** der Lenkausschlagwinkel der weiteren Achse entlang einer progressiven Kennlinie in Abhängigkeit vom Lenkausschlagwinkel der primärgesteuerten Achse veränderbar ist.

2. Mehrachslenkung nach Anspruch 1, **dadurch gekennzeichnet, daß** die primärgesteuerte Achse die in Fahrtrichtung des Fahrzeuges vordere Achse ist und durch ein Orbitrol gesteuert ist.

3. Mehrachslenkung nach Anspruch 1 oder 2, **dadurch gekennzeichnet, daß** die Steigung der progressiven Kennlinie sich stetig verändert.

4. Mehrachsenkung nach einem der Ansprüche 1 bis 3, **dadurch gekennzeichnet, daß** die Veränderung des Lenkausschlagwinkel der weiteren Achse durch ein elektrohydraulisches Lenksystem (5) bewirkt wird.

5. Mehrachslenkung nach Anspruch 4, **dadurch gekennzeichnet, daß** das elektrohydraulische Lenksystem (5) mindestens einen Lenkreglerbaustein (6) und ein Magnetventil (7) aufweist.

6. Mehrachslenkung nach Anspruch 5, **dadurch gekennzeichnet, daß** in dem Lenkreglerbaustein (6) mindestens eine Kennlinie des Lenkverhältnisses LV zwischen dem Lenkausschlagwinkel der primärgesteuerten Achse und dem Lenkausschlagwinkel der weiteren Achse gespeichert ist.

7. Mehrachslenkung nach einem der Ansprüche 5 oder 6, **dadurch gekennzeichnet,** daß der Lenkreglerbaustein (6) einen durch ein Steuersignal beaufschlagbaren Signaleingang (12) aufweist, wobei das Steuersignal aus dem Lenkausschlagwinkel der primärgesteuerten Achse generiert wird.

8. Mehrachslenkung nach einem oder mehreren der Ansprüche 5 bis 7, **dadurch gekennzeichnet, daß** der Lenkreglerbaustein (6) mit einer separaten Einstellvorrichtung (9) zur Verschiebung des Kennlinienursprunges der Kennlinie der weiteren Achse im Hinblick auf den Lenkausschlagwinkel der primärgesteuerten Achse versehen ist.

9. Mehrachslenkung nach Anspruch 8, **dadurch gekennzeichnet, daß** die Einstellvorrichtung (9) mindestens zwei Einstellbereiche aufweist, wobei die Bereiche gleiche oder unterschiedliche Größen aufweisen und an den Bereichsgrenzen vorzugsweise Rastpunkte vorhanden sind.

10. Mehrachslenkung nach einem der Ansprüche 8 oder 9, **dadurch gekennzeichnet, daß** jedem Wert des Einstellbereiches der Einstellvorrichtung (9) des Lenkreglerbausteines der weiteren Achse eine Verschiebung der progressiven Kennlinie für das Lenkwinkelverhältnis LV zwischen der primärgesteuerten-Achse und der weiterer Achse zugeordnet ist.

11. Mehrachslenkung nach einem der Ansprüche 9 oder 10, **dadurch gekennzeichnet, daß** den Einstellbereichen der Einstellvorrichtung ein oder mehrere Potentiometer zugeordnet sind.

12. Mehrachslenkung nach einem der Ansprüche 1 bis 11, **dadurch gekennzeichnet, daß** der primärgesteuerten Achse ein elektrohydraulisches Lenksystem (16) zugeordnet ist, das einen Signaleingang für das Steuersignal einer automatischen Spurführung aufweist.

13. Mehrachslenkung nach Anspruch 12, **dadurch gekennzeichnet, daß** das elektrohydraulische Lenksystem (16) mindestens einen Lenkreglerbaustein (17) und ein Magnetventil (18) aufweist.

14. Mehrachslenkung nach einem der Ansprüche 8 bis 13, **dadurch gekennzeichnet, daß** bei großer Verschiebung des Kennlinienursprunges der weiteren Achse und/oder großer Verstellgeschwindigkeit am Orbitrol (1) aus dem Ölkreislauf von Orbitrol (1) und Vorderachslenkzylinderbaugruppe (2,3) durch ein Magnetventil (18) der primärgesteuerten Achse eine gewisse Ölmenge entnehmbar ist.

15. Mehrachslenkung nach Anspruch 14, **dadurch gekennzeichnet, daß** die Ölmenge dergestalt gesteuert entnehmbar ist, daß die Summe der sich ergebenden Lenkwinkelveränderungen von primärgesteuerter Achse und weiterer Achse im wesentlichen konstant ist.

16. Mehrachslenkung nach einem oder mehreren der Ansprüche 5 bis 13, **dadurch gekennzeichnet, daß** die Orbitrol/Lenkzylinderbaugruppe (1,2,3) und das Magnetventl (9) für die weitere Achse eine gemeinsame Ölversorgung aufweisen.

17. Mehrachslenkung nach Anspruch 12, **dadurch gekennzeichnet, daß** das elektrohydraulische Lenksystem (16) mit einer separaten Einstellvorrichtung (19) zur Steuerung eines Offsets für einen zusätzlichen Lenkwinkel der primärgesteuerten Achse VA versehen ist.

18. Mehrachslenkung nach Anspruch 17, **dadurch gekennzeichnet, daß** die Einstellvorrichtung (19) symmetrisch aufgebaut ist und mindestens einen Einstellbereich für den zusätzlichen Lenkwinkel aufweist, wobei der Einstellbereich vorzugsweise Maximalwert oder Rastpunkte im Bereich von +/- 2° aufweist.

19. Mehrachslenkung nach einem der Ansprüche 13 bis 18, **dadurch gekennzeichnet, daß** die Lenkreglerbausteine (6) und (17) bei Umkehrung der Arbeitsrichtung des Fahrzeuges ihrer Achse zugeordnet bleiben und entsprechend der Umkehrung der Arbeitsrichtung vertauscht angesteuert werden.

20. Mehrachslenkung nach einem der Ansprüche 13 bis 19, **dadurch gekennzeichnet, daß** die Lenkreglerbausteine (6) und (17) mit durch Steuersignale beaufschlagbaren Signaleingängen versehen sind, deren bedarfsweise AnSteuerung eine Umschaltung zwischen automatischer Spurführung (20) und Hinterachslenkung bewirkt.

21. Mehrachslenkung nach Anspruch 19, **dadurch gekennzeichnet, daß** das Steuersignal für die automatische Spurführung (20) der primärgesteuerten Achse zugeordnet ist.

22. Mehrachslenkung nach einem oder mehreren der vorangegangenen Ansprüche, **dadurch gekennzeichnet, daß** sie eine Schaltvorrichtung (24) für die Umkehrung der Arbeitsrichtung aufweist, die die Position der Fahrerkabine (23) des zugehörigen Fahrzeuges abtastet.

23. Mehrachslenkung nach einem oder mehreren der Ansprüche 13 bis 22, **dadurch gekennzeichnet, daß** die Lenkreglerbausteine einen Kontrollmodus aufweisen, der bei Straßenfahrt des Fahrzeuges wirksam ist und bei dem der der automatischen Spurführung zugeordnete Lenkreglerbaustein über eine Übertragungsfunktion den Lenkausschlagwinkel der über die Kennlinie abhängig gesteuerten Achse mit dem Lenkausschlagwinkel der primärgesteuerten Achse vergleicht.

24. Mehrachslenkung nach Anspruch 23, **dadurch gekennzeichnet, daß** bei ermittelten Sollwertabweichungen während des Lenkausschlagwinkelvergleiches der im Kontrollmodus arbeitende Lenkreglerbaustein (17) eine Störmeldung generiert und zur Anzeige bringt.

25. Mehrachslenkung nach Anspruch 23 oder 24, **dadurch gekennzeichnet, daß** bei ermittelten Abweichungen während des Lenkausschlagwinkelvergleiches eine Notlenkstrategie aktiviert wird.

26. Mehrachslenkung nach einem oder mehreren der Ansprüche 13 bis 25, **dadurch gekennzeichnet, daß** die Lenkreglerbausteine (17) und (6) in eine gemeinsame elektronische Lenksteuerung (27) integriert sind.

27. Mehrachslenkung nach Anspruch 26**, dadurch gekennzeichnet, daß** die Signalein- und ausgänge beider Lenkreglerbausleine (17) und (6) an der Lenksteuerung (27) angeordnet sind.

28. Mehrachsienkung nach einem oder mehreren der Ansprüche 13 bis 26, **dadurch gekennzeichnet, daß** die Logikkomponenten der Lenkreglerbausteine (17) und (6) als unabhängige Software-Prozeduren (Task) implementiert sind.

29. Mehrachslenkung nach Anspruch 25, **dadurch gekennzeichnet, daß** die Logikkomponenten der Lenkreglerbausteine (17) und (6) auf einer gemeinsamen Microprozessorhardware (28) implementiert sind.

30. Mehrachslenkung nach einem der Ansprüche 24 bis 28, **dadurch gekennzeichnet, daß** die elektronische Lenksteuerung (27) einen zusätzlichen Microprozessor (29) aufweist, der als Microcontroller die Signalein- und ausgänge der in einem Microprozessor (28) integrierter Lenkreglerbausteine (17) und (6) überwacht.

31. Mehrachslenkung nach Anspruch 28**, dadurch gekennzeichnet, daß** der als Microcontroller arbeitende Microprozessor (29) bei fehlerhafter Funktion einer der Lenkreglerbausteine (17), oder (6) die Funktion dieses Lenkreglerbausteines übernimmt.

32. Mehrachslenkung nach einem oder mehreren der Ansprüche 23 bis 29, **dadurch gekennzeichnet, daß** die Magnetventile (18) und (7) durch einen der Microprozessoren (28,29) bei fehlerhafter Funktion der Mehrachslenkung in einen stromlosen Zustand schaltbar sind.

33. Mehrachslenkung nach einem oder mehreren der Ansprüche 13 bis 25, **dadurch gekennzeichnet, daß** die Lenkreglerbausteine (17) und (6) über ein Kommunikationsnetzwerk mit einer Steuer- und Bedienkonsole verbunden sind.

34. Mehrachslenkung nach Anspruch 33, **dadurch gekennzeichnet, daß** das Kommunikationsnetzwerk ein serielles CAN- Bussystem ist.

35. Mehrachslenkung nach Anspruch 33 oder 34, **dadurch gekennzeichnet, daß** das Kommunikationsnetzwerk mehrere redundante Bussysteme aufweist.

36. Mehrachslenkung nach Anspruch 33, **dadurch gekennzeichnet, daß** das Kommunikationsnetzwerk für den Signalaustausch zwischen allen Bauteilen der Mehrachslenkung vorgesehen ist.

37. Mehrachslenkung nach Anspruch 36, **dadurch gekennzeichnet, daß** alle Bauteile der Mehrachslenkung über redundante Signalwege miteinander verknüpft sind.
